**Europäisches Patentamt**

**European Patent Office**

**Office européen des brevets**

(19)

(11) Publication number : **0 389 374 B1**

(12)
# EUROPEAN PATENT SPECIFICATION

(45) Date of publication of patent specification :
**16.09.92 Bulletin 92/38**

(51) Int. Cl.⁵ : **A01K 11/00**

(21) Application number : **90400792.9**

(22) Date of filing : **22.03.90**

(54) **Stand-alone ear tag and method of applying the same.**

(30) Priority : **22.03.89 NZ 228456**

(43) Date of publication of application :
**26.09.90 Bulletin 90/39**

(45) Publication of the grant of the patent :
**16.09.92 Bulletin 92/38**

(84) Designated Contracting States :
**AT BE CH DE DK ES FR GB GR IT LI LU NL SE**

(56) References cited :
**EP-A- 0 125 915**
**FR-A- 2 509 960**
**GB-A- 2 125 343**
**US-A- 3 916 904**

(73) Proprietor : **Gardner, Michael Stuart**
**108 Waiatarua Road**
**Remuera Auckland (NZ)**

(72) Inventor : **Gardner, Michael Stuart**
**108 Waiatarua Road**
**Remuera Auckland (NZ)**

(74) Representative : **Hasenrader, Hubert et al**
**Cabinet BEAU DE LOMENIE 55, rue**
**d'Amsterdam**
**F-75008 Paris (FR)**

**Description**

This invention relates to a stand-alone ear tag for livestock, and to a method of applying the same.

Many types of ear tags for livestock and the like are available. Ear tags are generally applied to the ear or other portion of an animal by means of a suitable applicator. Generally the applicator includes a pin, blade or other means which is used to pierce the ear of an animal. Some attempt can be made to disinfect the pin, blade or other means, between application of tags on different animals. The FR-A-2 509 960 discloses a stand-alone ear tag, according to the prior art portion of claim 1, including at least one main body portion, a neck portion extending outwardly therefrom, with a head portion adjacent is distal end ; the head portion having cutting means for piercing an animal's ear or skin, said neck and head portion being engageable with driving means. EP-A-0 125 915 discloses a method of applying a stand-alone ear tag to an animal, according the prior art portion of claim 13, including the steps of:

a) engaging driving means of an ear tag applicator with the neck and head portions of an ear tag ;

b) positioning of said drive means and said tag adjacent an ear or skin of an animal ;

c) actuating said driving means, such that cutting means pierces said ear or skin and such that said head portion and at least a portion of said neck portion are driven through said ear or skin; and

d) thereafter removing said driving means ; leaving said ear tag located adjacent said ear or skin of said animal.

However, such embodiments are not always successful and may lead to cross-infection from one animal to another. In addition, the pin or blade used to pierce the ear or other portion often makes a wound which is larger than might otherwise be the case, and this can cause unnecessary or increased discomfort to the animal. Thus, problems have previously been encountered with infection and other damage to the ear or other portion of the animal during application of an ear tag.

It is an object therefore of the present invention to provide an ear tag for livestock, and a method of applying the same, which goes some way toward overcoming or minimising the abovementioned problems, or which at least provides the public with a useful alternative. For purposes of clarity "stand-alone" as in stand-alone ear tag is defined as an ear tag which has no separate anchoring means whether integrally formed with the tag or otherwise.

Further objects of the invention will become apparent from the following description .

According to one aspect of the present invention there is provided a stand-alone ear tag including at least one main body portion, a neck portion extending outwardly therefrom, with a head portion adjacent its distal end said head portion having cutting means for piercing an animal's ear or skin, said neck and head portion being engageable with driving means, wherein said neck portion includes a substantially hollow bore extending therethrough for insertion of said driving means.

According to a further aspect of the present invention there is provided a method of applying a stand-alone ear tag to an animal, including the steps of:

a) engaging driving means of an ear tag applicator with the neck and head portions of an ear tag;

b) positioning said driving means and said tag adjacent an ear or skin of an animal;

c) actuating said driving means, such that cutting means pierces said ear or skin and such that said head portion and at least a portion of said neck portion are driven through said ear or skin; and

d) thereafter removing said driving means ; leaving said ear tag located said ear or skin of said animal ;

wherein said ear or skin is pierced by cutting means comprised in the head portion of the ear tag and said driving means is inserted in a substantially hollow bore extending through said neck portion, so that said driving means is shielded by said tag from contact with the animal during application.

Preferred features of the invention are set out in the dependent claims.

BRIEF DESCRIPTION OF THE DRAWINGS

Further aspects of the present invention will become apparent from the following description, which is given by way of example only, and with reference to the accompanying drawings in which:

Figure I: shows a plan view of an ear tag according to one aspect of the present invention;

Figure 2: shows a cross-sectional view of an ear tag according to the same aspect of the present invention;

Figure 3: shows a plan view of an ear tag according to a further aspect of the present invention;

Figure 4: shows a cross-sectional view of an ear tag according to Figure 3 of the present invention;

Figure 5: shows a cross-sectional view of an ear tag according to a further aspect of the present invention.

DETAILED DESCRIPTION OF THE PREFERRED EMBODIMENTS OF THE PRESENT INVENTION

Referring now to Figures I and 2 of the accompanying drawings, there is provided by the present invention an ear tag 2. The ear tag 2 includes a main body portion 3, with a neck portion 4 extending outwardly therefrom. The neck portion 4 includes a substantially hollow bore 5 extending therethrough. This neck and bore may be annular, square or rectangular in cross-section depending on the type of applicator driving means used during application.

At the distal end of the neck 4 is provided a head portion 6. The bore 5 extends into the head portion. The head may be narrower or broader than represented in the drawings and it may be hollow or solid.

There is provided a cutting means or tip 7. The cutting tip 7 is preferably formed of a hard or rigid material, such as for example acetal. However, it would be appreciated that other suitable materials may also be used.

The cutting tip 7 may include a body 8. The cutting tip 7 is preferably of a triangular or pointed shape, so as to provide for a sharp piercing or cutting surface, as will be further described hereinafter. The body 8 is preferably substantially flat and angled towards cutting tip 7 so as not to impede piercing of an animal's ear or skin and, once inserted into an animal's ear, so as to lie in substantially the same plane as the said ear.

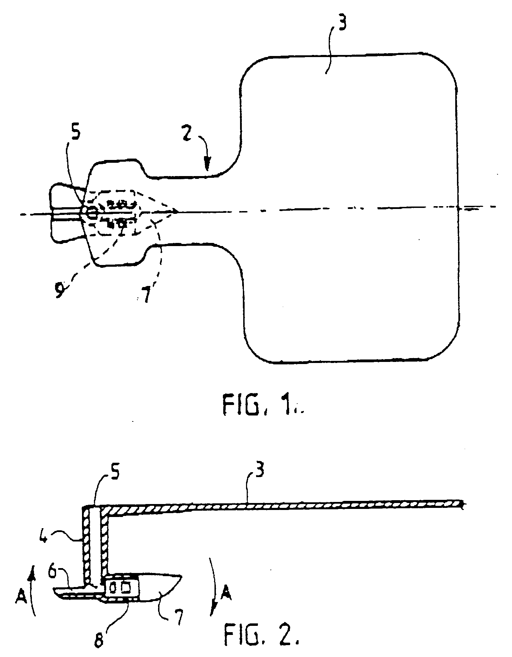

Referring now to Figure 2 of the accompanying drawings, in use, a driving means of an ear tag applicator (not shown) is inserted into the bore 5. It will be appreciated that this driving means may comprise an elongate pin or like means, depending on the shape and dimension of the bore 5. Upon insertion of the driving means into the bore 5, the head 6 of the ear tag 2, along with the cutting tip 7, are moved in the directions indicated by the arrows A as shown in Figure 2, until the head 6 and the cutting tip 7 lie substantially in the plane of the bore 5, (i.e. substantially perpendicular to the original position shown in Figure 2).

The applicator, attached ear tag 2 and head 6 are then located in a position adjacent an animal ear or other portion to which the tag is to be applied. Once the applicator and tag have been placed in the correct position, the driving means of the applicator is actuated, with the cutting tip 7 being forced through the ear or other portion of the animal by means of the forward movement of the driving means. As mentioned above, the cutting tip 7 may be formed of a substantially rigid material, so as to facilitate the piercing of the ear or skin. The cutting tip 7 is envisaged to be in the nature of a knife type edge which cuts rather than a bayonet type point which forces a path through the ear or skin. To facilitate this the tip is tapered toward its point with cutting edges on its side. The body 8 is shown to be integrally formed or joined with the head portion 6 and, as shown in Figure I, it has ribs 9 adapted to strengthen the said forming or joining and to ensure that the body 8 and head portion 6 do not separate during the piercing of an animal's ear.

However, a cone or needle shaped cutting tip might be more effective under certain conditions and with certain animals and accordingly the use of such tips is also envisaged.

Once the ear or skin has been pierced, the cutting tip 7 and the remainder of the head portion 6 are driven through the ear or skin. In addition, a portion of the neck 4 will extend through the ear or skin.

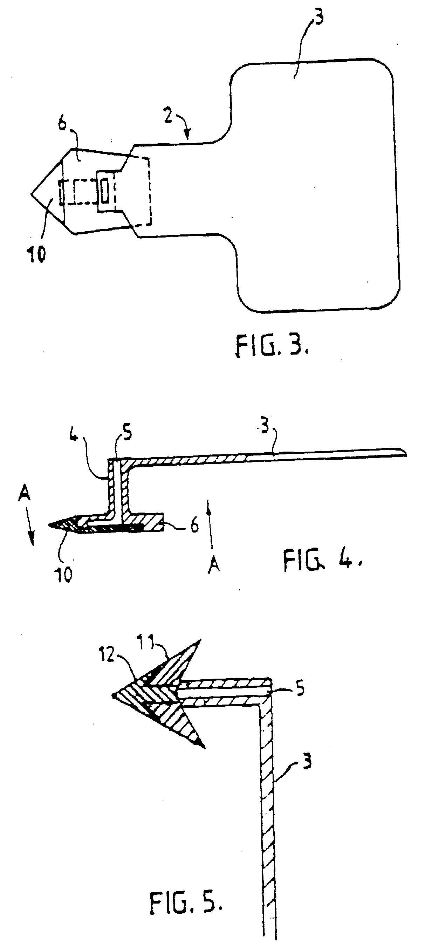

Referring now to Figures 3 and 4 of the accompanying drawings, there is provided an ear tag 2 having an engageably removable cutting tip I0. The ear tag 2 includes a main body portion 3, with a neck portion 4 extending outwardly therefrom. The neck portion 4 includes a substantially hollow bore 5 extending therethrough. As will be seen from Figure 3, the cutting tip I0 engages with the ear tag 2, so as to provide a head 6, which has a substantially sharp or pointed end thereto. In use, a driving means such as a pin of an ear tag applicator is inserted into the bore 5.

Upon insertion of the driving means into the bore 5, the head 6 of the ear tag 2, along with the cutting tip I0, are moved in the directions indicated by the arrows A as shown in Figure 4, until the head 6 and the cutting tip I0 are substantially in the plain of the bore 5, (i.e. substantially perpendicular to the original position shown in Figure 4). The ear tag is then applied to the animal in the manner state above. In this way, an ear tag may be applied to an ear or other portion of an animal, without the need for the applicator driving means itself to pierce the ear or other portion.

This has a number of advantages insofar as hygiene is concerned, With the majority of previously available tag applicators, the knife or pin of the applicator actually pierced the ear or other portion, and thereafter carried the head of an ear tag through the wound so formed. It will be appreciated that this can lead to cross-infection and the like, even if disinfecting methods are employed. With the tag and method of the present invention, however, the tag along pierces and touches the ear, or the wound, thus reducing the risk of cross-infection and the like.

Once the tag has been applied, the tag 2 will remain in place about the animals' ear or other portion of the animals body, as it will be retained by the head 6. Alternatively, the cutting tip I0 may be removed, or allowed to fall off. However, the tag 2 itself will remain in place about the animals' ear or other portion of the animals' body, as it will be retained by the head 6.

Figure 5 shows a further aspect of the present invention. The tag 3 has a head II and tip I2. Such tip I2 may be cone shaped (as shown in cross section) or needle shaped depending on the required use. It will be seen that, apart from the above, that the orientation of the head 11 relative to the tag 3 differs between the Figure 1 and Figure 5 embodiments otherwise, the principle remains the same.

In this particular embodiment it will be appreciated that the head/tip remain at the same angle; before, during and after application of the tag to the ear or skin of the animal. Thus, no bending of the head is required during application.

As mentioned above, the cutting tips 7 and I0 may be formed of a suitable rigid material. On the other hand, it is preferable that the ear tag 2 be formed of a less rigid material. In one preferred form, the ear tag 2 may be formed of urethane. However, any suitable or appropriate material may be used.

The cutting tip and tag of the present invention may be formed by any suitable or appropriate technique. For example, a suitable moulding or extrusion process may be used. In particular, it is envisaged that the cutting tip and tag may be integrally formed or moulded or constructed so as to interfit with each other.

This may be achieved by moulding the head around the tip or alternatively moulding the head and the tip separately and engaging them together prior to the application of the tag.

It is envisaged that variations and modifications may be made to the invention, without departing from the scope thereof. For example, the body portion 3 of the tag may be of any suitable or appropriate shape. Similarly, the shape and configuration of the head portion 6 may be varied, without departing from the scope of the invention. Finally, a separate tag or panel member may be located between the body and head portions and be secured by the neck portion of the ear tag. Such member may serve as an additional identification means, contain an insecticide or an electronic disc or finally render the ear tag tamper proof.

**Claims**

1. A stand-alone ear tag including at least one main body portion (3), a neck portion (4) extending outwardly therefrom, with a head portion (6) adjacent its distal end; said head portion having cutting means (7, 10, 12) for piercing an animal's ear or skin, said neck (4) and head (6) portion being engageable with driving means, characterised in that said neck portion (4) includes a substantially hollow bore (5) extending therethrough for insertion of said driving means.

2. A stand-alone ear tag according to claim 1 wherein the cutting means (7) have a flattened body portion (8) angled towards a sharpened cutting portion.

3. A stand-alone ear tag according to claim 1 wherein the cutting means (12) are releasably engageable with the head portion (6).

4. A stand-alone ear tag according to any one of claims 1 to 3 wherein the cutting means (7, 10, 12) comprise a rigid material.

5. A stand-alone ear tag according to any one of claims 1 to 4 wherein the cutting means (7, 10, 12) have a tip to pierce an animal's ear or skin.

6. A stand-alone ear tag according to claim 5 wherein the cutting means (7) are cone shaped.

7. A stand-alone ear tag according to claim 5 wherein the cutting tip is needle shaped.

8. A stand-alone ear tag according to any one of the preceding claims wherein the cutting means (7, 10, 12) and the head portion (6) are movable from a position where they are both perpendicular to the neck portion (4) and the bore (5) to a position where they lie in the plane of said neck portion (4).

9. A stand-alone ear tag according to any one of the preceding claims wherein the cutting means (7, 10, 12) extend from the head portion (6).

10. A stand-alone ear tag according to any one of the preceding claims wherein the neck portion (4) is elongate thereby locating the head (6) and body (8) portion remote, one from the other.

11. A stand-alone ear tag according to any one of the preceding claims wherein the neck portion (4) is flexible or resilient and integrally formed with said cutting means (7, 10).

12. A stand-alone ear tag according to any one of the preceding claims wherein a panel member is secured on or by the neck portion (4) between said body (8) and head (6) portions.

13. A method of applying a stand-alone ear tag to an animal, including the steps of:
   a) engaging driving means of an ear tag applicator with the neck (4) and head (6) portions of an ear tag (3);
   b) positioning said driving means and said tag adjacent an ear or skin of an animal;
   c) actuating said driving means, such that cutting means (7) pierces said ear or skin and such that said head portion (6) and at least a portion of said neck portion (4) are driven through said ear or skin; and
   d) thereafter removing said driving means; leaving said ear tag (3) located adjacent said ear or skin of said animal; characterised in that said ear or skin is pierced by cutting means (7,10,12) comprised in the head portion (6) of the ear tag (3) and in that driving means is inserted in a substantially hollow bore (5) extending through said neck portion (4), so that said driving means is shielded by said tag from contact with the animal during application.

14. A method of applying a stand-alone ear tag according to claim 13 wherein during application of the ear tag (3) the head portion (6) is bent so as to provide a uni-directional bore (5) for insertion of the driving means.

15. A method of applying a stand-alone ear tag according to claim 13 wherein the neck (4) and head (6) portions are positioned substantially uni-directionally one to the other.

## Patentansprüche

1. Einstückige Ohrmarke ohne separate Verankerungseinrichtung, mit mindestens einem Hauptkörperabschnitt (3), einem sich davon nach außen erstreckenden Halsabschnitt (4) mit einem nahe seines distalen Endes angeordneten Kopfabschnitt (6), wobei der Kopfabschnitt Schneidmittel (7, 10, 12) zum Durchstechen eines Tierohrs oder von Tierhaut aufweist und der Halsabschnitt (4) und der Kopfabschnitt (6) mit Betätigungsmitteln in Eingriff gebracht werden kann, **dadurch gekennzeichnet, daß** der Halsabschnitt (4) eine im wesentlichen hohle Bohrung (5) enthält, die sich durch den Halsabschnitt (4) zum Einsetzen der Betätigungsmittel erstreckt.

2. Einstückige Ohrmarke nach Anspruch 1, in der die Schneidmittel (7) einen abgeflachten Körperabschnitt (8) aufweisen, der in Richtung eines geschärften Schneidabschnitts gewinkelt ist.

3. Einstückige Ohrmarke nach Anspruch 1, in der die Schneidmittel (12) lösbar in Eingriff mit dem Kopfabschnitt (6) gebracht werden können.

4. Einstückige Ohrmarke nach einem der Ansprüche 1 bis 3, in der die Schneidmittel (7, 10, 12) aus einem festen Material gebildet sind.

5. Einstückige Ohrmarke nach einem der Ansprüche 1 bis 4, in der die Schneidmittel (7, 10, 12) eine Spitze zum Durchstechen eines Tierohrs oder von Tierhaut aufweisen.

6. Einstückige Ohrmarke nach Anspruch 5, in der die Schneidmittel (7) kegelförmig ausgebildet sind.

7. Einstückige Ohrmarke nach Anspruch 5, in der die Schneidspitze nadelförmig ausgebildet ist.

8. Einstückige Ohrmarke nach einem der vorangehenden Ansprüche, in der die Schneidmittel (7, 10, 12) und der Kopfabschnitt (6) von einer Stellung, in der beide senkrecht zu dem Halsabschnitt (4) und der Bohrung (5) stehen, zu einer Stellung, in der sie in der Ebene des Halsabschnitts (4) liegen, bewegbar sind.

9. Einstückige Ohrmarke nach einem der vorangehenden Ansprüche, in der sich die Schneidmittel (7, 10, 12) von dem Kopfabschnitt (6) weg erstrecken.

10. Einstückige Ohrmarke nach einem der vorangehenden Ansprüche, in der der Halsabschnitt (4) zur Aufnahme des Kopfabschnitts (6) und des Körperabschnitts (8), die beabstandet voneinander angeordnet sind, verlängert ist.

11. Einstückige Ohrmarke nach einem der vorangehenden Ansprüche, in der der Halsabschnitt (4) flexibel oder elastisch ausgebildet und einteilig mit den Schneidmitteln (7, 10) gebildet ist.

12. Einstückige Ohrmarke nach einem der vorangehenden Ansprüche, in der ein Plattenteil an oder nahe dem Halsabschnitt (4) zwischen dem Körperabschnitt (8) und dem Kopfabschnitt (6) befestigt ist.

13. Verfahren zum Anbringen einer einstückigen Ohrmarke ohne separate Verankerungseinrichtung an Tieren, mit den folgende Schritten:
a) ein Eingriffbringen von Betätigungsmitteln eines Ohrmarkenapplikators mit dem Halsabschnitt (4) und dem Kopfabschnitt (6) einer Ohrmarke (3),
b) Positionieren der Betätigungsmittel und der Marke nahe eines Tierohrs oder von Tierhaut,
c) Betätigen der Betätigungsmittel, so daß die Schneidmittel (7) das Ohr oder die Haut durchstechen und der Kopfabschnitt (6) und zumindest ein Teil des Halsabschnitts (4) durch das Ohr oder die Haut getrieben werden,
und
d) anschließendes Entfernen der Betätigungsmittel, wobei die Ohrmarke (3) nahe dem Ohr oder der Haut des Tieres angeordnet bleibt,
dadurch gekennzeichnet, daß
daß Ohr oder die Haut von Schneidmitteln (7, 10, 11) durchstochen wird, die in dem Kopfabschnitt (6) der Ohrmarke (3) enthalten sind und die Betätigungsmittel in eine im wesentlichen hohle Bohrung (5), die sich durch den Halsabschnitt (4) erstreckt, eingesetzt werden, so daß die Betätigungsmittel durch die Ohrmarke von einem Kontakt mit dem Tier während der Anwendung abgeschirmt sind.

14. Verfahren zum Anbringen einer einstückigen Ohrmarke nach Anspruch 13, in dem der Kopfabschnitt (6) während des Anbringens der Ohrmarke (3) so gebogen wird, daß eine in eine Richtung verlaufende Bohrung (5) zum Einsetzen der Betätigungsmittel erzeugt wird.

15. Verfahren zum Anbringen einer einstückigen Ohrmarke nach Anspruch 13, in dem der Halsabschnitt (4) und der Kopfabschnitt (6) im wesentlichen in einer Richtung verlaufend zueinander angeordnet sind.

**Revendications**

1. Marque d'oreille indépendante, comprenant au moins une partie principale de corps (3), une partie de col (4) dépassant vers l'extérieur de la partie de corps, avec une partie de tête (6) adjacente à son extrémité externe, la partie de tête ayant un dispositif de coupe (7, 10, 12) destiné à percer une oreille ou la peau d'un animal, les parties de col (4) et de tête (6) étant destinées à coopérer avec un dispositif d'entraînement, caractérisée en ce que la partie de col (4) a un trou (5) qui la traverse et permet l'introduction du dispositif d'entraînement.

2. Marque indépendante d'oreille selon la revendication 1, dans laquelle le dispositif de coupe (7) a une partie aplatie de corps (8) inclinée vers une partie aiguisée de coupe.

3. Marque indépendante d'oreille selon la revendication 1, dans laquelle le dispositif de coupe (12) est destiné à coopérer temporairement avec la partie de tête (6).

4. Marque indépendante d'oreille selon l'une quelconque des revendications 1 à 3, dans laquelle le dispositif de coupe (7, 10, 12) est formé d'un matériau rigide.

5. Marque indépendante d'oreille selon l'une quelconque des revendications 1 à 4, dans laquelle le dispositif de coupe (7, 10, 12) a un bout destiné à percer une oreille ou la peau d'un animal.

6. Marque indépendante d'oreille selon la revendication 5, dans laquelle le dispositif de coupe (7) a la forme d'un cône.

7. Marque indépendante d'oreille selon la revendication 5, dans laquelle le bout de coupe a une forme d'aiguille.

8. Marque Indépendante d'oreille selon l'une quelconque des revendications précédentes, dans laquelle le dispositif de coupe (7, 10, 12) et la partie de tête (6) sont mobiles d'une position dans laquelle ils sont perpendiculaires à la partie de col (4) et au trou (5) à une position dans laquelle Ils se trouvent dans le plan de la partie de col (4).

9. Marque indépendante d'oreille selon l'une quelconque des revendications précédentes, dans laquelle le dispositif de coupe (7, 10, 12) dépasse de la partie de tête (6).

10. Marque indépendante d'oreille selon l'une quelconque des revendications précédentes, dans laquelle la partie de col (4) est allongée si bien que la partie de tête (6) et la partie de corps (8) sont placées à distance l'une de l'autre.

11. Marque indépendante d'oreille selon l'une quelconque des revendications précédentes, dans laquelle la partie de col (4) est flexible ou élastique et est formée en une seule pièce avec le dispositif de coupe (7, 10).

12. Marque indépendante d'oreille selon l'une quelconque des revendications précédentes, dans laquelle un organe formant un panneau est fixé sur la partie de col (4) ou par celle-ci entre les parties de corps (8) et de tête (6).

13. Procédé d'application d'une marque indépendante d'oreille à un animal, comprenant les étapes suivantes :
a) la mise d'un dispositif d'entraînement d'un applicateur de marque d'oreille en coopération avec les parties de col (4) et de tête (6) d'une marque d'oreille (3),
b) le positionnement du dispositif d'entraînement et de la marque près d'une oreille ou de la peau d'un animal,
c) la manoeuvre du dispositif d'entraînement, afin que le dispositif de coupe (7) perce l'oreille ou la peau et que la partie de tête (6) et une partie au moins de la partie de col (4) soient entraînées à travers l'oreille ou la peau, et
d) l'extraction ultérieure du dispositif d'entraînement, si bien que chaque étiquette (3) reste positionnée pris de l'oreille ou de la peau de l'animal,

caractérisé en ce que l'oreille ou la peau est percée par un dispositif de coupe (7, 10, 12) disposé dans la partie de tête (6) de la marque d'oreille (3), et en ce que le dispositif d'entraînement est introduit dans un trou (5) formé dans la partie de col (4) afin que le dispositif d'entraînement soit protégé par l'étiquette du contact avec l'animal pendant l'application.

14. Procédé d'application d'une marque indépendante d'oreille selon la revendication 13, dans lequel, au cours de l'application de la marque d'oreille (3), la partie de tête (6) est repliée afin qu'elle forme un trou unidirectionnel (5) d'introduction du dispositif d'entraînement.

15. Procédé d'application d'une marque indépendante d'oreille selon la revendication 13, dans laquelle les parties de col (4) et de tête (6) sont disposées de manière pratiquement unidirectionnelle l'une par rapport à l'autre.

FIG. 1.

FIG. 2.

FIG. 3.

FIG. 4.

FIG. 5.